Europäisches Patentamt

(19) European Patent Office

Office européen des brevets

(11) Publication number: **0 206 976 B1**

# (12) EUROPEAN PATENT SPECIFICATION

(45) Date of publication of patent specification :
**11.09.91 Bulletin 91/37**

(21) Application number : **86630108.8**

(22) Date of filing : **20.06.86**

(51) Int. Cl.⁵ : **B60C 9/26, B60C 15/06, B60C 9/00**

(54) **Pneumatic tyres and reinforcements therefor.**

(30) Priority : **27.06.85 GB 8516275**

(43) Date of publication of application :
**30.12.86 Bulletin 86/52**

(45) Publication of the grant of the patent :
**11.09.91 Bulletin 91/37**

(84) Designated Contracting States :
**DE FR GB IT**

(56) References cited :
**BE-A- 564 481**
**DE-A- 1 033 059**

(56) References cited :
**FR-A- 1 153 397**
**FR-A- 2 229 563**
**FR-A- 2 487 264**
**GB-A- 2 141 676**

(73) Proprietor : **Apsley Metals Limited**
**Livery House 169 Edmund Street**
**Birmingham B3 2JB (GB)**

(72) Inventor : **McGlashen, James Neil**
**23 Mendip Avenue**
**Winstanley Nr. Wigan Lancashire (GB)**

(74) Representative : **Weyland, J.J. Pierre**
**Goodyear Technical Center-Luxembourg**
**L-7750 Colmar-Berg (LU)**

## Description

This invention relates to tyres having reinforcements therein e.g. as breaker or bead components.

As a reinforcement in a tyre it is known to use an elastomeric ply reinforced by tyre cord in which a single continuous tyre cord extends back and forth across the ply e.g. in a zig-zag fashion, thereby providing loops along the longitudinal edges of the ply rather than cut ends. Whilst this type of construction works well and has many advantages over previously used constructions, there may be a problem maintaining the configuration of the cord comprising a number of filaments because the small "bend radius" of each loop means that the filament of the cords have a tendency to spring apart at the loops.

A further problem may occur when the single cord is both of helically wound wire and in a zig-zag configuration, since the looped edge construction will result in the helix angle, and therefore "wind-up" effect, remaining the same, despite the alternate changes in direction of the cord. A tyre according to the preamble of claim 1 is known, e.g. from FR-A-2229563, having one free end not enclosed by an arcuate portion of an adjacent cord. Such free cut ends are known to have less adhesion to rubber.

It is an object of the present invention to overcome the aforementioned problems by providing a larger bend radius for the cord loops without reintroducing the feature of cut cord ends along the longitudinal fabric edges. Furthermore it is possible within the present invention to overcome the "wind-up effect" which can result from a helical wire cord by alternating lengths of left-hand and right-hand helical wire.

The above mentioned problem is solved by the features of claim 1.

According to the present invention there is provided a pneumatic tyre including at least one reinforcing member that comprises an elastomeric ply reinforced by interlocking discontinuous cords, each cord comprising at least two linear portions extending transversely of the ply and being joined together through a side portion adjacent one edge of the ply, wherein any free end of any respective cord is located between the transverse linear portions of another cord adjacent the side portion thereof. Preferably the side portions are arcuate.

According to a further embodiment of the present invention the reinforcing member is a breaker for a tyre joined end to end to form the ply hoop.

According to yet another embodiment of the present invention there is provided a tyre having a pair of beads each of which comprises an annular bead core, an apex strip extending radially outwardly from the bead core and a filler strip, wherein the filler strip is a reinforcing member according to the above paragraph.

The discontinuous tyre cords are preferably of uniform length and preferably between 1.75 and 3.5 times the width of the ply, more preferably between 2.0 and 2.5 times the width of the ply. Preferably the tyre cords are arranged in general "U" shapes with alternate cords reversed and interlocked. Alternatively the tyre cords may be arranged with a double bend i.e. a general $\sim$ shape in which case adjacent interlocking tyre cords are substantially the same configuration and not reversed. The configuration of the cords is suitably retained by means of a rubber composition pressed onto one or both sides of the cords. At each extreme of the tyre cord fabric there will be a free end and this may be bent on itself to prevent damage.

The adjacent portions of the cords may be laid substantially touching one another or at a spacing of between 0.2 and 1.2 times the cord diameter. At the longitudinal edges of the strip the cord may be bent through an angle about a vertical axis. Preferably the tyre cords comprise a twisted package of high modulus material filaments having a twist angle of not more than 18°. By high modulus material is meant material having a modulus of 5000 to 21000 kg/mm², for example steel, glass fibre or aromatic polyamide (e.g. Kevlar - Registered Trade Mark).

In this specification the twist angle of a cord is giver by Tan (angle of twist)

$$= \frac{\eta \times cord\ diameter\ (mm)}{2 \times lay\ length\ (mm)}$$

The filaments or cords may be precoated or pretreated in any of the conventional ways including precoating with elastomeric material. The cords may be constructed of closely packed filaments or they may be of the open filament type.

The cords may extend at 90° to the longitudinal centre line of the fabric but may also be at the more usual acute angle to the centre line preferably about 20° for a breaker.

Embodiments of the present invention will be described by way of example only with reference to the accompanying drawings in which:-

Figure 1 is a plan view of a short length of tyre cord fabric of the prior art

Figure 2 is an enlarged plan view of one of the loops of the tyre cord fabric of the prior art shown in Figure 1

Figure 3 is a plan view of a short length of tyre cord fabric according to the present invention

Figure 4 is an enlarged plan view of two adjacent lengths of the tyre cord fabric of the present invention shown in Figure 3, and

Figure 5 is a plan view of a short length of tyre cord fabric according to the present invention.

Figure 6 is a cross-section through a tyre according to the invention.

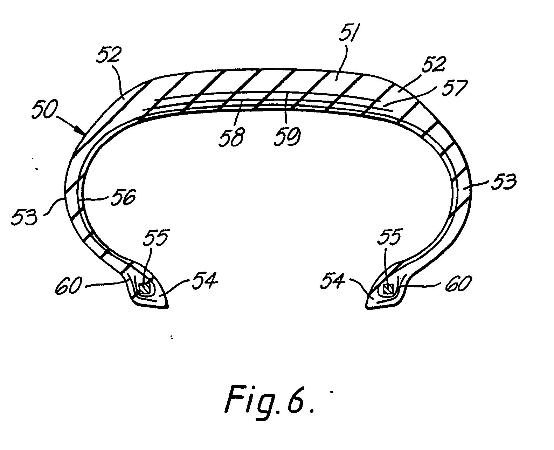

With reference to Figure 6 there is illustrated a typical radial carcass tyre 50 intended for use on a passenger car. By radial carcass tyre is meant a tyre the carcass of which is reinforced by cords which make a bias angle of between 70° and 90° to the direction of rotation of the tyre.

The tyre 50 has a tread portion 51 having shoulder portions 52 on each axial side thereof. Sidewalls 53 extend radially inwardly from the shoulders 52 and terminate in bead portions 54 which are each reinforced by an annular bead 55. The tyre is reinforced by an annular carcass ply 56 which extends from one bead 55 to the other bead 55 through the sidewalls 53 and under the tread portion 51. The tread portion 51 is further reinforced in the crown area of the tyre by a breaker 57 comprising a pair of annular breaker belts 58 and 59. The breaker belts 58 and 59 each comprise an elastomeric ply reinforced by cord having the rubber coated on both sides thereof. The cord may be of any suitable construction known in the trade, for example, the cord may be steel tyre cord of four filaments of 0.25 mm diameter twisted with an open twist to a cord diameter of 0.65 mm. However, the cord could be produced from other suitable materials such as nylon, aromatic polyamide, glass-fibre or rayon, and have a plurality of filaments the number of which are determined by the strength requirements of the cord. The radially inner end portions of the carcass 56 are turned around the beads 54 from the inside to the outside and extend radially outwardly of the bead. A filler strip 60 is located axially outwardly of each bead 55.

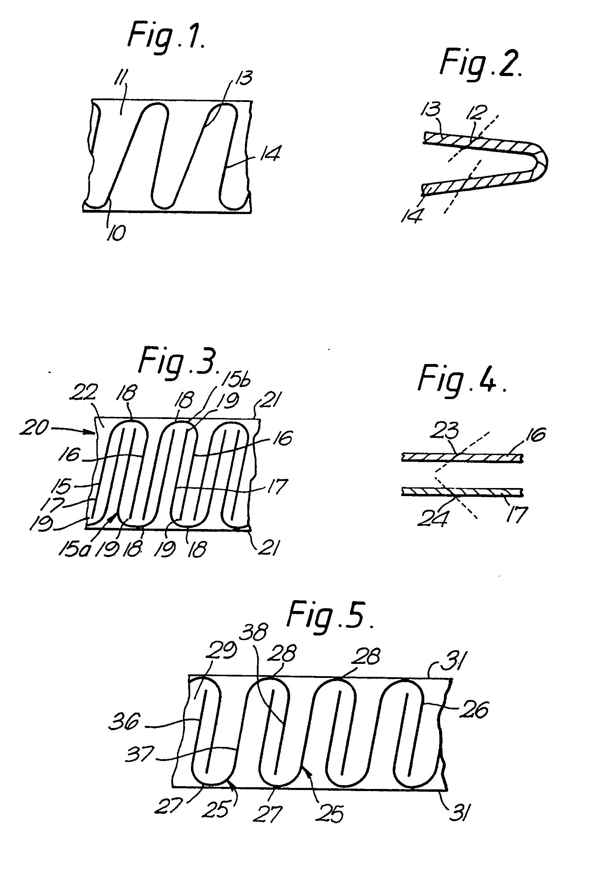

In Figure 1 there is illustrated a reinforcing ply which is in the form of a strip sheet having a single continuous tyre cord 10 extending back and forth across the strip in zig-zag fashion at an acute angle, to the longitudinal centre line of the sheet, preferably at an angle of 20°. The cord is held in position by means of unvulcanised rubber composition 11 pressed into the assembly by means of a pair of rollers in the same manner as for conventional tyre cord fabric.

Figure 2 illustrates the wind-up effect of the helical wound cord, preferably steel cord, despite the change in direction of the cord 10. The orientation of the helix 12 remains the same in adjacent portions 13 and 14 of the cord.

With reference to Figure 3, there is illustrated a reinforcing member for use in a tyre according to this invention, and which comprises an elongate elastomeric ply 20 having substantially uniform lengths of discontinuous cord 15, each laid across the sheet and back in a U-shape and having two linear portions 16 and 17 extending transversely of the ply and which are joined by a side portion 18, preferably arcuate in shape and located adjacent the edge 21 of the ply 20. Preferably the linear portions 16 and 17 make an angle of between 20° - 70° to the longitudinaal centre line of the sheet. Alternate cord lengths e.g. 15a and 15b are reversed and intermeshed so that the longitudinal edges 21 of the ply are formed by arcuate portions (loops) 18, The intermeshed U-shaped cord 15 is arranged so that the free ends 19 on the linear portions 16 and 17 of each cord 15 are located between transverse linear portions 16 and 17 of another adjacent U-shaped cord end near the base thereof adjacent the respective side portion 18 so that the free ends 19 are surrounded by the adjacent cord. The cords are held in position by means of an unvulcanised rubber composition 22 pressed into the assembly by means of a pair of rollers in the same manner as for conventional tyre fabric. Figure 4 illustrates the absence of helical wind-up effect due to the change of direction of the helix angle 23 and 24 in adjacent discontinuous cord portions.

The cord fabric in Figure 5 is an elongate elastomeric ply 29 with substantially uniform lengths of cord 25, each laid across the sheet, back and across again to give three linear portions 36, 37, 38 and two arcuate side portions (loops) 27, 28, one at each longitudinal sheet edge 31. The lengths of cord 25, are laid so that the linear portions thereof make an angle of about 70° to the longitudinal centre line of each sheet. Adjacent cords are interlocked and have the same configuration along the length of the sheet, i.e. they are not reversed as are the cords in Figure 3.

The cords are held in position by means of an unvulcanised rubber composition 29 pressed into the assembly by means of a pair of rollers in the same manner as for conventional tyre fabric. Although as stated the configuration of the lengths of the cords is not reversed along the sheet, alternate lengths of cords can be arranged so that the helix angle of adjacent portions of the cords is reversed.

The reinforcing ply as described above can be used to form the belts 58 and 59 by forming a hoop of the ply, or alternatively a reinforcing ply of the above type can be used to form a filler or chaffer strip in the bead portion of the tyre. The different uses will of course require different cord materials, and different construction of cord, for example a steel cord of several twisted filaments could be used in the belt, whereas a nylon cord may be used in the filler strip. However, the use of the cord to form a discontinuous reinforcement in the plies is similar.

In the case of a breaker belt the linear portions 16 and 17 of each discontinuous cord preferably make an angle of substantially 20° with the longitudinal centre line of the ply, and in the case of a bead filler the linear portions make an angle of substantially 70° with the longitudinal centre line of the ply.

## Claims

1. A pneumatic tyre (50) including at least one reinforcing member that comprises an elastomeric ply (20) being reinforced by interlocking discontinuous cords (15,25) and each cord (15,25) comprising at least two linear portions (16,17;36,37,38) extending transversely of the ply, the adjacent linear portions (16,17;36,37,38) being joined together through a side portion (18; 27,28) adjacent one edge (21,31) of the ply, and a free end (19) of any one cord being located between two transverse linear portions (16,17;36,37,38) of a single adjacent cord and adjacent to the respective side portion (18;27,28) joining said two transverse linear portions,
characterised in that
each free end (19) of any one cord is located between two transverse linear portions of a single adjacent cord.

2. A pneumatic tyre as claimed in Claim 1
characterised in that
the side portions (18;27,28) adjacent the edge (21,31) of the ply are arcuate.

3. A tyre according to Claim 2
characterised in that
each discontinuous tyre cord (15) consists of two linear portions (16 and 17) joined by the arcuate portion in a general U configuration.

4. A tyre according to Claim 1 or Claim 2
characterised in that
a third linear portion (38) extends transversely of the ply and is joined to one (37) of the other two linear portions (36 and 37) by a second side portion (28) adjacent the other edge (31) of the ply.

5. A tyre according to any one of the preceding claims
characterised in that
the linear portions (16,17;36,37,38) traverse the ply to make a bias angle with the longitudinal axis of the ply of between 90° - 60°.

6. A tyre according to any one of the preceding claims
characterised in that
the discontinuous tyre cords are of substantially uniform length.

7. A reinforcement for a tyre according to any one of the preceding claims
characterised in that
the tyre cords (15, 25) are held in place by means of a rubber composition.

8. A tyre according to any one of the preceding claims
characterised in that
the reinforcing member is a breaker belt.

9. A tyre according to any one of Claims 1 to 8
characterised in that
the tyre has an annular bead core, and the reinforcing member is a bead reinforcing strip.

10. A tyre according to any one of Claims 1 to 9
characterised in that
the discontinuous cords all have a length equal to a distance of between 1.75 and 3.5 times the width of the ply.

## Patentansprüche

1. Luftreifen (50) umfassend mindestens ein Verstärkungselement, das eine elastomere Lage (20) umfaßt, die durch ineinandergreifende diskontinuierliche Corde (15, 25) verstärkt ist und wobei jeder Cord (15, 25) mindestens zwei gerade Abschnitte (16, 17; 36, 37, 38 ) umfaßt, die quer zur Lage verlaufen, wobei die benachbarten geraden Abschnitte (16, 17; 36, 37, 38) durch einen Seitenabschnitt (18; 27, 28) miteinander verbunden sind, der an einem Rand (21, 31) der Lage angrenzt, und wobei ein freies Ende (19) irgendeines Cords zwischen zwei quer verlaufenden geraden Abschnitten (16, 17; 36, 37, 38) eines einzelnen angrenzenden Cords angeordnet ist und an den jeweiligen Seitenabschnitt (18; 27, 28) angrenzt, der die zwei quer verlaufenden geraden Abschnitte verbindet,
dadurch gekennzeichnet,
daß jedes freie Ende (19) irgendeines Cords zwischen zwei quer verlaufenden geraden Abschnitten eines einzigen angrenzenden Cords angeordnet ist.

2. Luftreifen nach Anspruch 1,
dadurch gekennzeichnet,
daß die Seitenabschnitte (18; 27, 28), die an den Rand (21, 31) der Lage angrenzen, gebogen sind.

3. Reifen nach Anspruch 2,
dadurch gekennzeichnet,
daß jeder diskontinuierliche Reifencord (15) aus zwei geraden Abschnitten (16 und 17) besteht, die durch den gebogenen Abschnitt in einer allgemeinen U-Anordnung verbunden sind.

4. Reifen nach Anspruch 1 oder Anspruch 2,
dadurch gekennzeichnet,
daß ein dritter gerader Abschnitt (38) quer zu der Lage verläuft und mit einem (37) der anderen zwei geraden Abschnitte (36 und 37) durch einen zweiten Seitenabschnitt (28), der an den anderen Rand (31) der Lage angrenzt, verbunden ist.

5. Reifen nach einem der vorhergehenden Ansprüche,
dadurch gekennzeichnet,
daß die geraden Abschnitte (16, 17; 36, 37, 38) die Lagen queren, um einen schrägen Winkel mit der Längsachse der Lage zwischen 90° und 60° zu bilden.

6. Reifen nach einem der vorhergehenden Ansprüche,
dadurch gekennzeichnet,
daß die diskontinuierlichen Reifencorde im wesentlichen von einheitlicher Länge sind.

7. Verstärkung für einen Reifen nach einem der vorhergehenden Ansprüche,
dadurch gekennzeichnet,
daß die Reifencorde (15, 25) an Ort und Stelle gehalten werden mittels einer Gummizusammensetzung.

8. Reifen nach einem der vorhergehenden Ansprüche,
dadurch gekennzeichnet,
daß das Verstärkungselement ein Protektorgürtel ist.

9. Reifen nach einem der Ansprüche 1 bis 8,
dadurch gekennzeichnet,
daß der Reifen einen ringförmigen Wulstkern hat und das Verstärkungselement ein wulstverstärkender Streifen ist.

10. Reifen nach einem der Ansprüche 1 bis 9,
dadurch gekennzeichnet,
daß die diskontinuierlichen Corde alle eine Länge besitzen, die gleich einem Abstand zwischen 1,75 und 3,5 mal der Breite der Lage ist.

## Revendications

1. Bandage pneumatique (50) comprenant au moins un organe de renforcement constitué d'une nappe élastomère (20) renforcée par des câbles entrelacés discontinus (15, 25), chaque câble (15, 25) comprenant au moins deux portions linéaires (16, 17 ; 36, 37, 38) s'étendant transversalement le long de la nappe, les portions linéaires adjacentes (16, 17 ; 36, 37, 38) étant réunies par une portion latérale (18 ; 27, 28) adjacente à un bord (21, 31) de la nappe, chaque extrémité libre (19) de chacun des câbles étant située entre les portions linéaires transversales (16, 17 ; 36, 37, 38) d'un câble adjacent unique et en position adjacente à la portion latérale respective (18 ; 27, 28) réunissant les deux portions linéaires transversales,
caractérisé en ce que
chaque extrémité libre (19) de n'importe quel câble est située entre deux portions linéaires transversales d'un câble unique adjacent.

2. Bandage pneumatique selon la revendication 1,
caractérisé en ce que
les portions latérales (18 ; 27, 28) adjacentes aux bords (21, 31) de la nappe, sont courbes.

3. Bandage pneumatique selon la revendication 2,
caractérisé en ce que
chaque câble discontinu (15) pour bandages pneumatiques comprend deux portions linéaires (16 et 17) réunies par la portion courbe pour obtenir une configuration générale en U.

4. Bandage pneumatique selon la revendication 1 ou 2,
caractérisé en ce qu'une
troisième portion linéaire (38) s'étend transversalement par rapport à la nappe et est réunie à une portion (37) des deux autres portions linéaires (36 et 37), par une seconde portion latérale (28) adjacente à l'autre bord (31) de la nappe.

5. Bandage pneumatique selon l'une quelconque des revendications précédentes,
caractérisé en ce que
les portions linéaires (16, 17 ; 36, 37, 38) traversent la nappe pour former un angle en biais par rapport à l'axe longitudinal de la nappe, allant de 90° à 60°.

6. Bandage pneumatique selon l'une quelconque des revendications précédentes,
caractérisé en ce que
les câbles discontinus pour bandages pneumatiques sont d'une longueur essentiellement uniforme.

7. Renforcement pour bandages pneumatiques selon l'une quelconque des revendications précédentes,
caractérisé en ce que
les câbles (15, 25) pour bandages pneumatiques sont maintenus en place au moyen d'une composition de caoutchouc.

8. Bandage pneumatique selon l'une quelconque des revendications précédentes,
caractérisé en ce que
l'organe de renforcement est une nappe de sommet.

9. Bandage pneumatique selon l'une quelconque des revendications 1 à 8,
caractérisé en ce que
le bandage pneumatique comprend une tringle annulaire de talon, l'organe de renforcement étant une bandelette de renforcement pour talon.

10. Bandage pneumatique selon l'une quelconque des revendications 1 à 9,
caractérisé en ce que
les câbles discontinus ont tous une longueur égale à une distance allant de 1,75 à 3,5 fois la largeur de la nappe.

# Fig.1.

# Fig.2.

# Fig.3.

# Fig.4.

# Fig.5.

6

Fig.6.